# FASCICULE DE BREVET EUROPEEN

(11) **EP 1 085 725 B1**
(45) Date de publication et mention de la délivrance du brevet: **02.11.2011**
(21) Numéro de dépôt: 00402148.1
(22) Date de dépôt: 27.07.2000
(51) Int. Cl.: H04L 29/06

(54) **Procédé pour faire communiquer un utilisateur avec au moins une base de données.**
Verfahren zur Kommunikation eines Benutzers mit mindestens einer Datenbank
Procedure to make a user communicate with at least a database

(30) Priorité: 12.08.1999 FR 9910430
(43) Date de publication de la demande: 21.03.2001
(73) Titulaire: Alcatel Lucent, 75008 Paris (FR)
(72) Inventeur: Mahiddini, Patrice, 92700 Colombes (FR)
(74) Mandataire: Chaffraix, Sylvain

(56) Documents cités:
- WO-A-98/15122
- WO-A-99/01968
- US-A- 4 703 475
- ELWALID A I ET AL: "AN OVERVIEW OF THE MULTIMEDIA COMMUNICATIONS EXCHANGE (MMCX) AND ITS PERFORMANCE CHARACTERIZATION" BELL LABS TECHNICAL JOURNAL,US,BELL LABORATORIES, vol. 2, no. 2, 21 mars 1997 (1997-03-21), pages 15-34, XP000695167 ISSN: 1089-7089
- WECHTA J ET AL: "The impact of topology and choice of TCP window size on the performance of switched LANs" COMPUTER COMMUNICATIONS,NL,ELSEVIER SCIENCE PUBLISHERS BV, AMSTERDAM, vol. 22, no. 10, 25 juin 1999 (1999-06-25), pages 955-965, XP004178597 ISSN: 0140-3664

## Description

L'invention est relative à un procédé pour faire communiquer un utilisateur avec au moins une base de données par l'intermédiaire d'un réseau. Elle concerne également une installation d'utilisateur ainsi que des moyens de gestion du réseau permettant de mettre en oeuvre le procédé.

L'évolution des technologies dans le domaine des télécommunications permet une augmentation des débits d'informations qui devrait permettre un accès plus aisé aux bases de données se trouvant dans les réseaux existants, par exemple le réseau Internet.

A titre d'exemple de moyen technologique permettant des débits élevés, on citera ici les communications par satellite(s).

Cependant, on a constaté que le haut débit n'assure pas obligatoirement un accès rapide aux bases de données, et ne permet pas d'éviter les engorgements du réseau.

En effet, l'accès à un réseau de bases de données est, en général, effectué à l'aide d'un protocole assurant la fiabilité des communications. Ce protocole implique des échanges d'informations entre les "clients" et le "serveur" qui peuvent ralentir cette communication. De façon plus précise quand l'information, notamment sous forme de cellules ou de paquets, est émise d'un émetteur vers un récepteur, le récepteur renvoie un accusé de réception afin que l'émetteur s'assure que l'information transmise a été reçue correctement. Si l'information n'a pas été reçue correctement, l'émetteur reçoit un accusé de réception indiquant ce défaut, ou il ne reçoit pas d'accusé de réception du tout. Dans les deux cas, l'information est réémise par l'émetteur.

L'information est également réémise si l'émetteur ne reçoit pas d'accusé de réception dans un temps déterminé suivant l'émission.

Les performances des réseaux traversés et de leurs noeuds de communication (les routeurs) et l'engorgement de ces réseaux ont pour conséquences que des paquets parviennent au récepteur en un temps tel que l'accusé de réception arrive à l'émetteur après l'écoulement du temps déterminé. Ils sont donc considérés comme perdus et sont de nouveau envoyés par l'émetteur, ce qui entraîne une transmission inutile d'informations et donc une dégradation de la capacité de transmission du réseau et, éventuellement, de ses performances.

Un protocole dé ce type est par exemple le protocole dit "TCP" ("Transmission Control Prolocol") qui est couramment utilisé, en particulier dans le réseau Internet.

L'incompatibilité, dans les réseaux de bases de données, entre tes communications à haut débit et les communications fiables est particulièrement nette quand on utilise une communication à haut débit qui introduit un retard dé transmission non négligeable.

Il en est ainsi dans les systèmes de transmission par satellite(s) qui sont, ou seront, utilisés pour transmettre des grands débits d'informations, notamment pour des applications dites "multimédia".

Il est cependant possible, pour effectuer une transmission rapide, à haut débit, d'utiliser un protocole moins fiable, sans accusé de réception. A titre d'exemple, on peut citer ici le protocole UDP (User Datagram Protocol). Mais l'utilisation systématique de ce protocole n'est pas compatible avec la transmission dans un réseau de bases de données, car la transmission d'une proportion importante de données, notamment les programmes, exige une grande fiabilité.

L'invention fournit un procédé d'accès à des bases de données par l'intermédiaire de moyens de communication à haut débit sans engorgement sensible du réseau tout en permettant de conserver une qualité satisfaisante de transmission des informations.

L'invention concerne, selon un premier de ses aspects, un procédé d'accès à des bases de données qui est **caractérisé en ce qu'**on choisit une transmission, soit avec un protocole avec accusé de réception, soit avec un protocole sans accusé de réception

Ainsi, certaines données, notamment la plupart des images et des sons, n'exige pas le plus grand degré de fiabilité possible de transmission et il est alors possible de choisir un protocole sans accusé de réception qui privilégie la rapidité, ce qui est d'autant plus intéressant que ces données sont, en général, de grand volume.

Par ailleurs, la transmission d'un programme exige un grand degré de fiabilité et on choisira alors un protocole avec accusé de réception.

Les demandes de brevets WO 98 15122 et WO 99 01968 et l'article « *An Overview of the Multimedia Communications Exchange (MMCX) and its Performance Characterization »* de Elwalid A, I et al. mentionnent la possibilité d'envoyer des informations par le protocole TCP ou par le protocole UDP. Mais aucun ne divulgue la possibilité pour l'utilisateur de choisir entre un canal utilisant un protocole avec accusé de réception ou un canal utilisant un protocole sans accuse de réception.

Dans un mode dé réalisation, pour une même communication, certaines parties sont transmises avec un protocole du type à accusé de réception, ces parties étant par exemple des programmes, des sources de scripts ou de pages d'Interfaces Homme-machine (pages Web) et d'autres parties, telles que dès images, ou parties d'images, sont transmises avec un protocole ne faisant pas appel à des accusés de réception.

On notera ici que la transmission d'images ou de sons ne sera pas obligatoirement toujours effectuée avec un protocole sans accusé de réception. Ce choix de protocole est laissé à l'utilisateur ou à l'application (programme de gestion). En effet, certaines images nécessitent un degré élevé de fiabilité, par exemple des images à haute définition, notamment pour des applications médicales.

Le choix du protocole peut être effectué à volonté par l'utilisateur ou être effectué de façon automatique en fonction du type de données à transmettre et, éventuellement, de la taille de ces données. En effet, si, dans une communication, la proportion des données pouvant être transmises avec un degré de fiabilité relativement faible est peu importante par rapport aux données devant être transmises avec une grande fiabilité, il n'est pas indispensable de changer de protocole pour ces données en faible proportion, car, dans ce cas, le gain en rapidité serait peu important.

L'application décidant de la nature du protocole se trouve dans la base de données émettrice ou dans un serveur intermédiaire disposé entre le client et les bases de données. Dans cette dernière situation, ce serveur contrôlera la communication qu'il émet vers le client.

L'invention concerne, selon un autre de ses aspects, qui peut être utilisé indépendamment des précédents, ou en combinaison avec ces derniers, un procédé d'accès à des bases de données qui est **caractérisé en ce qu'**on fait appel à un protocole avec accusé de réception avec fenêtre d'acquittement de longueur variable.

On rappelle ici que la longueur de la fenêtre d'acquittement d'un protocole d'accusé de réception est le nombre de bits, d'octets, ou de cellules qui doivent être reçus par le récepteur avant qu'il émette un signal d'accusé de réception.

La variation de la fenêtre d'acquittement est, par exemple, décidée au niveau de l'émetteur (base de données ou serveur intermédiaire) en fonction du taux de paquets réémis. Si ce taux est élevé, on diminuera la fenêtre d'acquittement de façon que chaque réémission de données représente un plus faible volume de données à transmettre, ce qui augmente également la probabilité de transmission correcte dans un intervalle de temps donné.

La variation de la fenêtre d'acquittement peut également être déterminée au niveau du récepteur en fonction du débit reçu. Si on constate un faible débit de réception, alors le récepteur enverra à l'émetteur un signal lui demandant une fenêtre d'acquittement plus faible.

Le procédé selon l'invention trouve une application particulièrement utile dans le cas d'un système de transmission par satellite(s) dans lequel toutes les communications d'un abonné ou client de ce système passent par l'intermédiaire d'une station de connexion, notamment de type terrestre. On prendra ici comme exemple un système de transmission par satellites à orbites basses ou moyennes dans lequel la terre est divisée en zones dont chacune comprend une station de connexion. Par exemple, chaque zone a un diamètre de l'ordre de 700 kilomètres et est telle qu'à chaque instant, un satellite d'une constellation est présent pour relier un client dans la zone à la station de connexion et, quand ce satellite ne peut plus relayer la communication entre l'abonné et la station, un autre satellite prend immédiatement le relais.

Dans ce cas, le procédé de transmission selon l'invention peut être aisément utilisé entre la station de connexion et les abonnés. En effet, c'est sur cette partie du réseau, entre la station et les abonnés, que les temps de transmission sont les plus importants et donc que le mécanisme d'accusé de réception peut être le plus pénalisant.

Cependant, le procédé selon l'invention n'est pas limité à un système à satellites à orbites basses ou moyennes ; il peut également s'appliquer à un système à satellite géostationnaire.

La liaison des abonnés au réseau de base de données se fait par l'intermédiaire d'un serveur dans la station de connexion ou lié à la station de connexion.

Dans le cas où le réseau de bases de données est le réseau Internet ou un réseau analogue, on sait que les interrogations de bases de données des clients peuvent être interceptées par des serveurs dits "proxy", l'interception s'effectuant dans les deux sens, du client vers les bases de données et des bases de données vers les clients. Dans ces serveurs proxy, les réponses transmises par les bases de données sont conservées pendant un certain temps dans les moyens de stockage du serveur proxy et les pages chargées dans ce serveur sont transmises au client sans qu'il soit besoin d'effectuer une nouvelle connexion avec la base de données. Ainsi, le procédé selon l'invention peut être commandé à partir d'un tel serveur proxy dans une station de connexion ou liée à cette station.

L'invention concerne donc, selon un autre de ses aspects, un serveur pour un accès à un réseau de bases de données qui est **caractérisé en ce qu'**il comprend, pour sélectionner le type - avec ou sans accusé de réception - de protocole de transmission des données à transmettre vers le client, ce type étant choisi auto-matiquem.ent dans le serveur en fonction de la nature des données à transmettre et/ou des indications fournies par le client et/ou du volume des données.

Quand on utilise un protocole avec accusé de réception, le serveur comporte, de préférence, des moyens de réglage de la taille de la fenêtre d'acquittement. En effet, l'invention englobe un serveur destiné à communiquer avec un ou plusieurs clients par l'intermédiaire d'un protocole de transmission à accusé de réception qui est **caractérisé en ce qu'**il comporte des moyens pour faire varier la taille de la fenêtre d'acquittement, par exemple en fonction des débits de transmission de ce serveur vers le client.

L'invention concerne, selon encore un autre de ses aspects, un organe client, c'est-à-dire un organe d'interrogation de base de données. Cet organe est **caractérisé en ce qu'**il comporte un moyen pour choisir entre une transmission avec accusé de réception et une transmission sans accusé de réception, ce choix se traduisant au niveau des moyens à disposition de l'utilisateur, par exemple par un choix entre une transmission fiable et une transmission rapide.

Dans un mode de réalisation, l'organe client peut recevoir des données sur deux canaux différents, l'un dédié à un protocole avec accusé de réception, et l'autre à un protocole sans accusé de réception et il comporte des moyens pour remettre en ordre les données reçues sur ces deux canaux. De préférence, on affiche ces données dans un navigateur de l'organe client, après remise en ordre.

Le moyen de sélection peut être associé à un ordinateur classique. Il est constitué, par exemple, par un script ou une applet JAVA constituant une interface du navigateur.

Le moyen de sélection peut aussi fonctionner de façon automatique dans le serveur de bases de données ou dans le serveur intermédiaire ("proxy") ; dans ce cas, le choix entre les protocoles s'effectue en fonction du type de fichier à télécharger, par exemple, en fonction du suffixe dans son nom, tels que imagel.bmp, imagel.jpeg ou page.html. A titre d'exemples encore, si la base de données interrogée est destinée à fournir des images à haute résolution, le protocole de transmission demandé sera aussi à accusé de réception, et si la base de données interrogée fournit du son, tel que de la musique, le protocole demandé pourra être du type sans accusé de réception.

Le moyen de sélection peut également fonctionner de façon automatique dans l'organe client, le choix entre les protocoles s'effectuant en fonction de la question posée ou requête adressée aux bases de données.

La présente invention prévoit un procédé de transmission d'informations d'une base de données vers un client demandeur. A chaque communication, on choisit entre un protocole de transmission (TCP) avec accusé de réception et un protocole de transmission (UDP) sans accusé de réception.

Selon un mode de réalisation, pour une requête donnée d'un client, certaines données sont transmises avec un protocole de transmission avec accusé de réception et d'autres données sont transmises avec un protocole sans accusé de réception.

Selon un mode de réalisation, le protocole de transmission est choisi en fonction de la nature de la requête exprimée par l'utilisateur.

Selon un mode de réalisation, le choix du protocole est effectué en fonction de la nature des données à transmettre et/ou de leur volume.

Selon un mode de réalisation, lorsqu'on fait appel à un protocole de transmission avec accusé de réception, on choisit, à chaque communication, la longueur de la fenêtre d'acquittement.

Selon un mode de réalisation, on diminue la fenêtre d'acquittement quand on constate un taux de données défectueuses transmises dépassant une valeur prédéterminée.

La présente invention prévoit en outre un terminal pour la connexion à une base de données comportant deux canaux de réception, l'un pour des données reçues avec un protocole de transmission avec accusé de réception et l'autre pour des données reçues avec un protocole sans accusé de réception.

Selon un mode de réalisation, le terminal comporte une interface actionnable par l'utilisateur de façon à indiquer un choix entre une transmission fiable et une transmission rapide.

Selon un mode de réalisation, le terminal comporte un moyen de sélection automatique entre une transmission fiable et une transmission rapide en fonction de la requête adressée à la base de données.

Selon un mode de réalisation, le terminal comporte un moyen pour remettre en ordre les fichiers reçus sur les deux canaux différents.

Selon un mode de réalisation, les fichiers remis en ordre sont exploités dans le navigateur du terminal.

La présente invention prévoit encore un serveur destiné à être interposé dans un réseau entre un ou plusieurs utilisateurs et des bases de données, ce serveur ayant pour but d'interpréter les requêtes de l'utilisateur et/ou de stocker des données reçues de la base de données. Il comporte un moyen pour sélectionner le protocole de transmission des données de ce serveur vers l'utilisateur, cette sélection s'effectuant entre un protocole de transmission avec accusé de réception et un protocole de transmission sans accusé de réception.

Selon un mode de réalisation, le serveur comporte un moyen pour faire varier la fenêtre d'acquittement (N) en cas d'utilisation d'un protocole avec accusé de réception.

Selon un mode de réalisation, la fenêtre d'acquittement diminue quand le taux d'erreurs de transmission augmente.

La présente invention prévoit enfin une application du serveur à un système de transmission par satellite(s) dans lequel les communications de chaque utilisateur sont relayées par une station de connexion, les communications entre les utilisateurs et la station de connexion s'effectuant par l'intermédiaire de moyens à bord d'un satellite, le serveur étant disposé dans la station de connexion ou étant lié à cette station.

D'autres caractéristiques et avantages de l'invention apparaîtront avec la description de certains de ses modes dé réalisation, celle-ci étant effectuée en se référant aux dessins ci-annexés sur lesquels :
la figure 1 est un schéma d'un système utilisant le procédé conforme à l'invention,
la figure 2 est un schéma expliquant un aspect du procédé conforme à l'invention, et
la figure 3 est un schéma pour une autre réalisation du système conforme à l'invention.

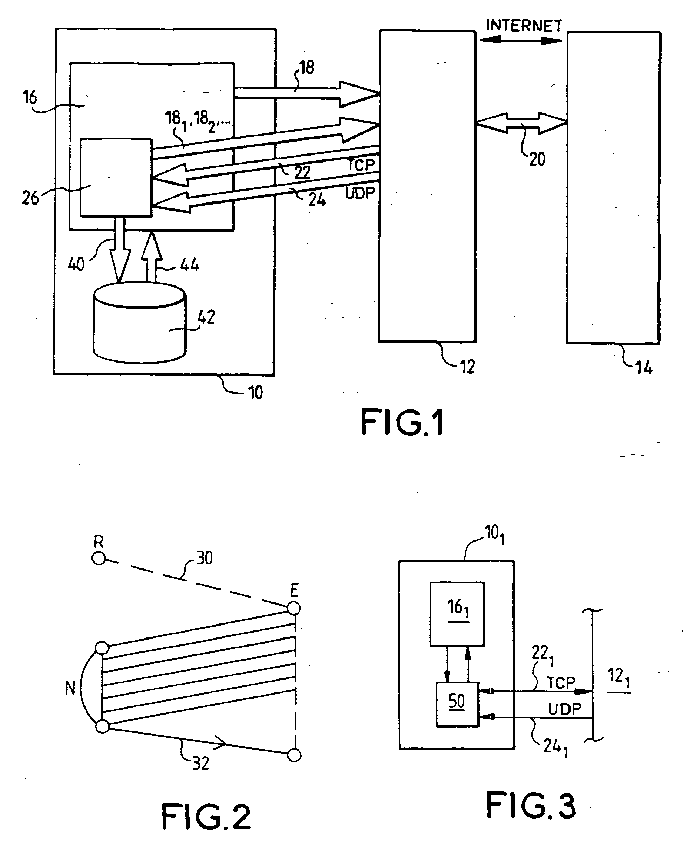

Le système représenté à titre d'exemple sur la figure 1 comprend un certain nombre d'installations client, dont une seule, de référence 10, a été représentée, un serveur proxy, ou serveur de proximité, 12 se trouvant dans une station de connexion d'un système de télécommunication par satellites, et le réseau Internet de bases de données, un seul serveur 14 ayant été représenté sur la figure.

L'installation client 10 comporte, de façon classique, un navigateur 16 qui envoie une requête 18 vers un serveur distant 14 et cette requête 18 est interceptée par le serveur 12 dont le but est d'interpréter la question transmise par le client afin de limiter le temps de connexion au serveur distant 14. Le réseau utilisé étant du type Internet, la communication 20 entre les serveurs 12 et 14 est du type TCP, c'est-à-dire avec accusé de réception pour chaque groupe de données.

Les données reçues du serveur 14 par le serveur 12 sont retransmises vers l'installation 10 d'utilisateur ou client.

Selon l'invention, la liaison entre le serveur 12 et l'installation 10 s'effectue selon l'un et/ou l'autre de deux canaux distincts, respectivement 22 et 24. Le canal 22 utilise un protocole TCP (avec accusé de réception), tandis que le canal 24 fait appel à un protocole de transmission de type UDP, sans accusé de réception. Le canal 22 est utilisé principalement pour des transmissions pour lesquelles un grand degré de fiabilité est nécessaire, tandis que le canal 24 est utilisé principalement pour transmettre des données pour lesquelles la rapidité est le critère principal.

Le navigateur 16 de l'installation utilisateur 10 comporte une interface tel qu'une applet JAVA permettant à l'utilisateur de déterminer la qualité souhaitée de la transmission, c'est-à-dire soit s'il souhaite une transmission fiable, soit s'il souhaite une transmission rapide. Cette décision de l'utilisateur est interprétée par le serveur 12 et est mise en oeuvre en fonction, d'une part, de l'occupation du réseau entre ce serveur 12 et l'utilisateur 10 et, d'autre part, des données à transmettre du serveur 12 vers l'utilisateur 10. Ainsi, une transmission multimédia comportant un mélange de programmes et d'images pourra être transmise en parallèle sur les canaux 22 et 24. Le canal 22 transmettra avec le protocole TCP les données de programme et le canal 24 transmettra avec le protocole UDP les données d'images.

Par ailleurs, le serveur 12 comporte un moyen pour faire varier la fenêtre d'acquittement des données transmises par le canal 22 TCP.

La figure 2 est un schéma illustrant le principe d'une fenêtre d'acquittement. Quand un récepteur R envoie une requête 30 vers un émetteur E, l'émetteur E envoie des données au récepteur R et ce dernier, quand il a reçu un nombre déterminé N d'octets, renvoie un accusé de réception 32 vers l'émetteur. Si l'émetteur E n'a pas reçu correctement l'accusé de réception, il renvoie de nouveau les N octets. Cette réémission augmente la densité du trafic dans une proportion d'autant plus importante que le nombre N d'octets est élevé. Ainsi, quand, par exemple, le serveur 12 constate que la qualité de transmission est défectueuse, il diminue la longueur N de la fenêtre d'acquittement de façon à limiter la quantité de données à réémettre. Ainsi, on peut diminuer le risque d'engorgement du réseau.

Le fonctionnement est le suivant :
En réponse à la requête 18, l'organe client 10 reçoit une page html qu'il analyse et charge (flèche 40) dans une mémoire, telle que celle du disque dur 42 d'un ordinateur. Les données enregistrées sur le disque dur 42 sont les adresses d'objets et les noms des fichiers.
Ensuite (flèches 18₁, 18₂), chaque adresse d'objet et nom de fichier est transféré de la mémoire 42 vers le navigateur 16 (flèche 44) de façon que l'applet 26 envoie des requêtes 18₁, 18₂, etc. pour chaque objet. Le canal choisi 22 ou 24 sera déterminé par le serveur proxy 12.

Après le chargement en séquence des divers objets, l'organe client remet en ordre les fichiers ou objets reçus qui sont en général des données de divers types, tels que des fichiers hypermedia ou hypertexte. Ces données remises en ordre sont exploitables, ou affichables, dans le navigateur 16 de l'organe client.

Dans l'exemple, le serveur 12 se trouve dans une station de connexion d'un système de transmission par satellite, la station 10 constituant un abonné de ce système de transmission.

Il est à noter que le choix du protocole ou canal de transmission a un intérêt pratique, surtout dans le sens de la base de données 14, ou du serveur 12, vers une installation client 10, car le volume des données à transmettre est plus important dans ce sens que dans l'autre. Cependant, le principe de choix du protocole peut être généralisé, par exemple pour la transmission d'informations entre deux abonnés. -

Dans le mode de réalisation représenté sur la figure 3, le terminal client 10₁ comporte un navigateur 16₁ ainsi qu'un serveur local de proximité 50.

Le navigateur 16₁ communique avec le serveur de proximité 12₁ par l'intermédiaire du serveur local 50.

Le serveur local 50 gère les communications avec le serveur 12₁ en utilisant, conformément à l'invention, au choix soit un protocole de type UDP par le canal 24₁, soit un protocole de type TCP par le canal 22₁.

Le navigateur 16₁ est classique, c'est-à-dire qu'il envoie des requêtes, traite des pages html et permet l'affichage des informations reçues.

## Revendications

1. Procédé de transmission d'informations d'une base de données vers un client demandeur sur requête de ce dernier, **caractérisé en ce que** ces données peuvent être transmises sur un canal utilisant un protocole de transmission (TCP) avec accusé de réception, ou sur un canal utilisant un protocole de transmission (UDP) sans accusé de réception, lesdits canaux étant distincts et **en ce que** le choix dudit canal est effectuée par l'utilisateur en fonction de la nature de la requête concernant le débit ou la fiabilité de transmission souhaité.

2. Procédé selon la revendication précédente, **caractérisé en ce que**, lorsqu'on fait appel à un protocole de transmission avec accusé de réception, on choisit, à chaque communication, la longueur (N) de la fenêtre d'acquittement.

3. Procédé selon la revendication 2, **caractérisé en ce qu'**on diminue la fenêtre d'acquittement quand on constate un taux de données défectueuses transmises dépassant une valeur prédéterminée.

4. Terminal pour la connexion à une base de données selon le procédé de la revendication 1, **caractérisé en ce qu'**il comporte deux canaux de réception (22, 24), l'un pour des données reçues avec un protocole de transmission (22) avec accusé de réception et l'autre (24) pour des données reçues avec un protocole sans accusé de réception, et **en ce qu'**il comporte une interface actionnable par l'utilisateur de façon à indiquer un choix entre une transmission fiable et une transmission rapide.

5. Terminal selon la revendication 4, **caractérisé en ce qu'**il comporte un moyen de sélection automatique entre une transmission fiable et une transmission rapide en fonction de la requête adressée à la base de données.

6. Terminal selon l'une quelconque des revendications 4 à 5, **caractérisé en ce qu'**il comporte un moyen pour remettre en ordre les fichiers reçus sur les deux canaux différents.

7. Terminal selon la revendication 6, **caractérisé en ce que** les fichiers remis en ordre sont exploités dans le navigateur (16) du terminal.

8. Serveur (12) destiné à être interposé dans un réseau entre un ou plusieurs utilisateurs et des bases de données, ce serveur ayant pour but d'interpréter les requêtes de l'utilisateur et/ou de stocker des données reçues de la base de données, **caractérisé en ce qu'**il comporte un moyen pour sélectionner le protocole de transmission des données de ce serveur vers l'utilisateur, cette sélection s'effectuant entre un canal utilisant un protocole de transmission avec accusé de réception et un canal utilisant un protocole de transmission sans accusé de réception en fonction de la nature de la requête exprimée par l'utilisateur, concernant le débit ou la fiabilité de transmission souhaité.

9. Serveur selon la revendication 8, **caractérisé en ce qu'**il comporte un moyen pour faire varier la fenêtre d'acquittement (N) en cas d'utilisation d'un protocole avec accusé de réception.

10. Serveur selon la revendication 9, **caractérisé en ce que** la fenêtre d'acquittement diminue quand le taux d'erreurs de transmission augmente.

11. Application du serveur selon l'une quelconque des revendications 8 à 10, à un système de transmission par satellite(s) dans lequel les communications de chaque utilisateur sont relayées par une station de connexion, les communications entre les utilisateurs et la station de connexion s'effectuant par l'intermédiaire de moyens à bord d'un satellite, le serveur étant disposé dans la station de connexion ou étant lié à cette station.

## Claims

1. A message for transmitting information from a database to a requesting client upon request from the client, **characterized in that** this data may be transmitted over a channel using a transmission protocol (TCP) with acknowledgment of receipt, or over a channel using a transmission protocol (UDP) without acknowledgment of receipt, said channels being distinct, and **in that** said channel is chosen by the user as a function of the nature of the request regarding the speed or reliability of the desired transmission.

2. A method according to the previous claim, **characterized in that**, whenever a transmission protocol with acknowledgment of receipt is enlisted, the length (N) of the acknowledgment window is chosen for each communication.

3. A method according to claim 2, **characterized in that** the acknowledgment window is reduced when a rate of transmitted defective data in excess of a predetermined threshold is observed.

4. A terminal for connecting to a database according to the method of claim 1, **characterized in that** it comprises two reception channels (22, 24), one for data received with a transmission protocol (22) with acknowledgment of receipt, and the other (24) for data received with a protocol without acknowledgment of receipt, and that it comprises an interface that may be activated by the user so as to indicate a choice between a reliable transmission and a speedy transmission.

5. A terminal according to claim 4, **characterized in that** it comprises a means of automatically selecting between a reliable transmission and a speedy transmission as a function of the request addressed to the database.

6. A terminal according to any one of the claims 4 to 5, **characterized in that** it comprises a means for putting the files received over the two different channels back into order.

7. A terminal according to claim 6, **characterized in that** the files put back into order are used within the terminal's browser (16).

8. A server (12) intended to be inserted within a network between one or more users and databases, the purpose of which server being to interpret the requests from the user and/or to store data received from the database, **characterized in that** it comprises a means for selecting the protocol for transmitting data from that server to the user; this selection being made between a channel using the transmission protocol with acknowledgment of receipt and a channel using a transmission protocol without acknowledgment of receipt as a function of the nature of the request expressed by the user, concerning the transmission's speed or reliability.

9. A server according to claim 8, **characterized in that** it comprises a means for varying the acknowledgment window (N) in the event that a protocol with acknowledgment of receipt is used.

10. A server according to claim 9, **characterized in that** the acknowledgment window decreases when the transmission error rate increases.

11. An application of the server as claimed in one of the claims 8 to 10 to a satellite-based transmission system, wherein the communications from each user are relayed by a connection station, the communications between the users and the connection stations being carried out via means on board a satellite, the server being either disposed within the connection station or linked to that station.

## Patentansprüche

1. Verfahren zum Übertragen von Informationen von einer Datenbasis an einen anfragenden Client auf dessen Anforderung, **dadurch gekennzeichnet, dass** diese Daten auf einem Kanal, welcher ein Übertragungsprotokoll (TCP) mit Empfangsbestätigung anwendet, oder auf einem Kanal, welcher ein Übertragungsprotokoll (UDP) ohne Empfangsbestätigung anwendet, übertragen werden können, wobei die besagten Kanäle verschieden sind, und dass die Wahl des besagten Kanals in Abhängigkeit von der Art der Anforderung in Bezug auf die Übertragungsrate oder die Zuverlässigkeit der gewünschten Übertragung durch den Benutzer erfolgt.

2. Verfahren nach dem vorstehenden Anspruch, **dadurch gekennzeichnet, dass**, wenn man ein Übertragungsprotokoll mit Empfangsbestätigung anwendet, man bei jeder Kommunikation die Länge (N) des Quittierungsfensters wählt.

3. Verfahren nach Anspruch 2, **dadurch gekennzeichnet, dass** man das Quittierungsfenster reduziert, wenn man eine Quote von übertragenen fehlerhaften Daten, welche einen vorbestimmten Wert überschreitet, feststellt.

4. Endgerät für den Anschluss an eine Datenbasis gemäß Anspruch 1, **dadurch gekennzeichnet, dass** es zwei Empfangskanäle (22, 24), der eine für unter Anwendung eines Übertragungsprotokolls (22) mit Empfangsbestätigung empfangene Daten, und der andere (24) für unter Anwendung eines Übertragungsprotokolls ohne Empfangsbestätigung, umfasst, und dass es eine von dem Benutzer betätigbare Schnittstelle umfasst, um eine Wahl zwischen einer zuverlässigen Übertragung und einer schnellen Übertragung anzugeben.

5. Endgerät nach Anspruch 4, **dadurch gekennzeichnet, dass** es ein Mittel zur automatischen Auswahl zwischen einer zuverlässigen Übertragung und einer schnellen Übertragung in Abhängigkeit von der an die Datenbasis gesendeten Anforderung umfasst.

6. Endgerät nach einem beliebigen der Ansprüche 4 bis 5, **dadurch gekennzeichnet, dass** es ein Mittel zum erneuten Ordnen der auf den zwei verschiedenen Kanälen empfangenen Dateien umfasst.

7. Endgerät nach Anspruch 6, **dadurch gekennzeichnet, dass** die erneut geordneten Dateien im Navigator (16) des Endgeräts ausgewertet werden.

8. Server (12), welcher in einem Netzwerk zwischen einem oder mehreren Benutzern und Datenbasen eingesetzt wird, wobei dieser Server zum Ziel hat, die Anforderungen des Benutzers zu interpretieren und/oder von der Datenbasis empfangene Daten zu speichern, **dadurch gekennzeichnet, dass** er ein Mittel zum Auswählen des Protokolls für die Übertragung der Daten von diesem Server an den Benutzer umfasst, wobei diese Auswahl in Abhängigkeit von der Art der vom Benutzer geäußerten Anforderung in Bezug auf die Übertragungsrate oder die Zuverlässigkeit der gewünschten Übertragung zwischen einem Kanal, welcher ein Übertragungsprotokoll mit Empfangsbestätigung anwendet, und einem Kanal, welcher ein Übertragungsprotokoll ohne Empfangsbestätigung anwendet, erfolgt.

9. Server nach Anspruch 8, **dadurch gekennzeichnet, dass** er ein Mittel zum Verändern des Quittierungsfensters (N) im Fall der Anwendung eines Protokolls mit Empfangsbestätigung umfasst.

10. Server nach Anspruch 9, **dadurch gekennzeichnet, dass** das Quittierungsfenster reduziert wird, wenn sich die Übertragungsfehlerquote erhöht.

11. Anwendung des Servers gemäß einem beliebigen der Ansprüche 8 bis 10 für ein satellitengestütztes Übertragungssystem, in welchem die Kommunikationen eines jeden Benutzers von einer Verbindungsstation übertragen werden, wobei die Kommunikationen zwischen den Benutzern und der Verbindungsstation über an Bord eines Satelliten angebrachte Mittel erfolgen, wobei der Server in der Verbindungsstation angeordnet oder mit dieser verbunden ist.
